# EUROPÄISCHE PATENTSCHRIFT

(11) **EP 0 552 603 B1**
(45) Veröffentlichungstag und Bekanntmachung des Hinweises auf die Patenterteilung: **10.01.1996**
(21) Anmeldenummer: 93100100.2
(22) Anmeldetag: 07.01.1993
(51) Int. Cl.: C08F 216/12

(54) **Lösliche Polymerisate**
Soluble polymers
Polymères solubles

(30) Priorität: 24.01.1992 DE 4201844
(43) Veröffentlichungstag der Anmeldung: 28.07.1993
(73) Patentinhaber: BASF Aktiengesellschaft, D-67063 Ludwigshafen (DE)
(72) Erfinder: Besecke, Siegmund, Dr., W-3250 Hameln (DE); Deckers, Andreas, Dr., W-6700 Ludwigshafen (DE); Lauke, Harald, Dr., W-6800 Mannheim 1 (DE)

(56) Entgegenhaltungen:
- EP-A- 0 184 731
- US-A- 2 426 325

## Beschreibung

Die vorliegende Erfindung betrifft in Tetrahydrofuran zu mindestens 95% lösliche Polymerisate, erhältlich durch Copolymerisation eines Monomerengemisches aus
A) 1 bis 99 Gew.-% mindestens eines zu mindestens 98% reinen Monomeren der allgemeinen Formel I

   CH₂=C(E)CH₂-O-CH₂C(F)=CH₂ I

   in der E und F ausgewählt sind aus der Gruppe aus -COOR¹, -COR¹, -CONRR³ und -CN, und R¹, R und R³ folgende Bedeutung haben:
   - R¹ =: H, C₁-C₁₈-Alkyl, C₃-C₈-Cycloalkyl, C₃-C₈-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, Hydoxy-C₁-C₅-alkyl, Amino-C₁-C₅-alkyl, N-C₁-C₄-Alkyl-amino-C₁-C₅-alkyl, N,N-Di-(C₁-C₄-Alkyl)-amino-C₁-C₅-alkyl, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino;
   - R,R³ =: H, C₁-C₁₈-Alkyl, C₃-C₈-Cycloalkyl, C₃-C₈-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino; und
B) 99 bis 1 Gew.-% mindestens eines weiteren radikalisch polymerisierbaren Monomeren.

Weiterhin betrifft die Erfindung ein Verfahren zur Herstellung von löslichen Polymerisaten, deren Verwendung zur Herstellung von Formkörpern sowie Formkörper aus diesen Polymerisaten.

Im J. of Appl. Polym. Sci. Polym. Letters Edition 25 (1987) 451 wird ein Copolymer aus Methylmethacrylat ("MMA") und Oxadimethylmethacrylat beschrieben. Nachteilig ist, daß das durch Massepolymerisation von 3,5 Gew.-% Oxadimethylmethacrylat und 96,5 Gew.-% Methylmethacrylat hergestellte hochvernetzte Copolymere nicht schmelzbar und unlöslich, d.h. technisch nicht verwertbar ist.

Aufgabe der vorliegenden Erfindung war es, lösliche, thermoplastisch verarbeitbare Copolymere, erhältlich durch Polymerisation von Oxadimethacrylaten und damit copolymerisierbaren Monomeren, bereitzustellen.

Demgemäß wurden die eingangs definierten Copolymere gefunden.

Außerdem wurden ein Verfahren zur Herstellung der Copolymere, deren Verwendung zur Herstellung von Formkörpern sowie daraus hergestellte Formkörper gefunden.

Als Komponente A) setzt man erfindungsgemäß 1 bis 99 Gew.-% mindestens eine Oxadimethacrylatverbindung I ein. Erfindungsgemäß weist das einzusetzende Monomere eine Reinheit von mindestens 98%, bevorzugt mindestens 99%, besonders bevorzugt mindestens 99,2% auf. Verwendet man Monomere, die dieses Reinheitskriterium nicht erfüllen, so erhält man in der Regel hochvernetzte, unlösliche und unschmelzbare Produkte.

Als Substituenten der Oxadimethacrylverbindungen I kommen bevorzugt folgende Reste in Betracht:
- R¹: Wasserstoff;
C₁-C₁₈-Alkyl, darunter vorzugsweise C₁-C₁₂-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl und Stearyl, besonders bevorzugt C₁-C₄-Alkyl wie Methyl, Ethyl, n-Propyl, i-Propyl, n-Butyl, i-Butyl, sek.-Butyl, tert.-Butyl;
C₃-C₈-Cycloalkyl wie Cyclopropyl, Cyclopentyl, Cyclohexyl, Cycloheptyl, Cyclooctyl, 4-Methylcyclohexyl, 4-Methoxy-cyclohexyl, 2,4,6-Trimethylcyclohexyl;
C₃-C₈-Cycloalkyl-C₁-C₅-alkyl wie Cyclopropylmethyl, Cyclopentylmethyl, Cyclohexylmethyl, Cyclopropylethyl, Cyclopentylethyl, Cyclohexylethyl, Cyclopropylpropyl, Cyclopentylpropyl, Cyclohexylpropyl, Cyclopentylbutyl, Cyclohexylbutyl, Cyclopentylpentyl, Cyclohexylpentyl, Cyclooctylpentyl;
Hydroxy-C₁-C₅-alkyl wie Hydroxymethyl, 2-Hydroxyethyl, 2-Hydroxypropyl, 3-Hydroxypropyl, 4-Hydroxybutyl, 5-Hydroxypentyl, 2,2-Dimethyl-3-hydroxypropyl;
Amino-C₁-C₅-alkyl wie Aminomethyl, 2-Aminoethyl, 3-Aminopropyl, 4-Aminobutyl, 5-Aminopentyl;
N-C₁-C₄-Alkyl-amino-C₁-C₅-alkyl wie N-Methylaminomethyl, 2-(N-Methylamino)ethyl, 3-(N-Methylamino)propyl, 4-(N-Methylamino)butyl, 5-(N-Methylamino)pentyl, N-Ethylaminomethyl, N-n-Propylaminomethyl, N-n-Butylaminomethyl;
N,N-Di-(C₁-C₄-Alkyl)amino-C₁-C₅-alkyl wie N,N-Dimethylaminomethyl, 2-(N,N-Dimethylamino)ethyl, 3-(N,N-Dimethylamino)propyl, 4-(N,N-Dimethylamino)butyl, 5-(N,N-Dimethylamino)pentyl, N,N-Diethylaminomethyl, N,N-Di(n-Propyl)aminomethyl, N,N-Di(i-Propyl)aminomethyl, N,N-Di-(n-Butyl)aminomethyl, N-Ethyl-N-methyl-aminomethyl, N-Methyl-N-propyl-aminomethyl;
C₆-C₁₈-Aryl wie Phenyl, Naphthyl, Anthracenyl, Phenantrenyl, Azulenyl, Biphenylenyl, Triphenylenyl, bevorzugt Phenyl, wobei die Arylreste bis zu drei der unter R⁴ genannten Gruppen tragen können;
C₆-C₁₈-Aryl-C₁-C₄-alkyl, bevorzugt Phenyl-C₁-C₄-alkyl wie Benzyl, 2-Phenylethyl, 3-Phenylpropyl, 4-Phenylbutyl, besonders bevorzugt Benzyl, 2-Phenylethyl, 3-Phenylpropyl, wobei die Arylgruppen bis zu drei der unter R⁴ genannten Gruppen tragen können;
- R,R³: C₁-C₁₈-Alkyl wie bei R¹ genannt, darunter besonders bevorzugt C₁-C₄-Alkyl wie Methyl, Ethyl, n-Propyl, i-Propyl, n-Butyl, sek.-Butyl, i-Butyl, tert.-Butyl;
C₃-C₈-Cycloalkyl wie Cyclopropyl, Cyclopentyl, Cyclohexyl, Cycloheptyl, Cyclooctyl, 4-methylcyclohexyl, 2,4,6-Trimethylcyclohexyl;
C₆-C₁₈-Aryl wie bei R¹ genannt, vorzugsweise Phenyl, welches bis zu drei der unter R⁴ genannten Gruppen tragen kann;
C₆-C₁₈-Aryl-C₁-C₄-alkyl wie bei R¹ genannt, vorzugsweise Phenyl-C₁-C₄-alkyl, besonders bevorzugt Benzyl, 2-Phenylethyl, 3-Phenylpropyl, wobei die Phenylgruppe bis zu drei der unter R⁴ genannten Gruppen tragen kann;
- R⁴: Halogen wie Fluor, Chlor, Brom und Iod, C₁-C₂₂-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Heneicosyl und n-Docosyl, vorzugsweise C₁-C₁₂-Alkyl wie Methyl, Ethyl, n-Propyl, i-Propyl, n-Butyl, sek.-Butyl, i-Butyl, tert.-Butyl, n-Pentyl, i-Pentyl, sek.-Pentyl, tert.-Pentyl, neo-Pentyl, n-Hexyl, n-Heptyl, n-Octyl, n-Nonyl, n-Decyl, n-Undecyl, n-Dodecyl und Stearyl, besonders bevorzugt C₁-C₄-Alkyl wie Methyl, Ethyl, n-Propyl, i-Propyl, n-Butyl, i-Butyl, sek.-Butyl, tert.-Butyl; C₁-C₄-Alkoxy wie Methoxy, Ethoxy, n-Propoxy und n-Butoxy, Carboxy, C₁-C₄-Alkoxy-carbonyl wie Methoxycarbonyl, Ethoxycarbonyl, n-Propoxycarbonyl und n-Butoxycarbonyl, Aminocarbonyl, C₁-C₄-Alkylaminocarbonyl wie Methylaminocarbonyl, Ethylaminocarbonyl, n-Propylaminocarbonyl und n-Butylaminocarbonyl, Di-(C₁-C₄-Alkyl)aminocarbonyl wie Dimethylaminocarbonyl, Diethylaminocarbonyl, Di-(n-Propyl) aminocarbonyl und Di-(n-Butyl)aminocarbonyl, Nitrilo, Nitro, Amino, C₁-C₄-Alkyamino wie Methylamino, Ethylamino, n-Propylamino und n-Butylamino, Di-(C₁-C₄-alkyl)amino wie Dimethylamino, Diethylamino, Di-(n-Propyl)amino und Di-(n-Butyl)amino.

Besonders bevorzugte Oxadimethacrylverbindungen I sind 2,2'-[Oxybis(methylen)]bis-2-propensäure-dimethylester, 2,2'-[Oxybis(methylen)]bis-2-propensäure-dicyclohexylester und 2,2'-[Oxybis(methylen)]bis-2-propensäure-cyclohexylester-2'-propensäure-methylester.

Oxadimethacrylverbindungen I sind für den Fall, daß E und F ≠ COOH, sind sowohl aus Acrylverbindungen der allgemeinen Formel II

H₂C=C(E)H II

als auch aus Alkoholen der allgemeinen Formel III

H₂C=C(E)CH₂OH III

durch Umsetzung mit Formaldehyd zugänglich. Ihre Herstellung ist beispielsweise in der US-A 4,889,948 beschrieben. Vorteilhafter ist es jedoch, speziell um besonders reine Verbindungen zu erhalten, wenn man nach einer der folgenden Methoden arbeitet:
A) Umsetzung einer Acrylverbindung der allgemeinen Formel II

   H₂C=C(E)H II

   in Gegenwart von Sauerstoff, mindestens einem tertiären Amin und vorzugsweise mindestens einem Polymerisationsinhibitor mit Formaldehyd oder einer Formaldehyd-liefernden Verbindung zum Alkohol der allgemeinen Formel III

   H₂C=C(E)CH₂OH III

   und anschließende weitere Umsetzung des Alkohols III,
   b₁) unter Isolierung desselben oder
   b₂) ohne Isolierung desselben
   unter Erhitzen in Gegenwart von Sauerstoff, mindestens einem tertiären Amin und vorzugsweise mindestens einem Polymerisationsinhibitor zur Oxadimethacrylverbindung I, CH₂=C(E)CH₂-O-CH₂C(E)=CH₂, oder
B) Umsetzung des Alkohols III in Gegenwart von Sauerstoff, mindestens einem tertiären Amin und vorzugsweise mindestens einem Polymerisationsinhibitor unter Erhitzen zur Oxadimethacrylverbindung I, CH₂=C(E)CH₂-O-CH₂C(E)-CH₂, oder
C) Umsetzung einer Mischung aus zwei verschiedenen Acrylverbindungen der allgemeinen Formeln II und IIa

   H₂C=C(E)H II

   H₂C=C(F)H IIa

   in Gegenwart von Sauerstoff, mindestens einem tertiären Amin und vorzugsweise mindestens einem Polymerisationsinhibitor mit Formaldehyd oder einer Formaldehyd-liefernden Verbindung zu den Alkoholen der allgemeinen Formeln III und IIIa

   H₂C=C(E)CH₂OH III

   H₂C=C(F)CH₂OH IIIa

   und anschließende weitere Umsetzung mit oder ohne weitere Isolierung der Alkohole III und IIIa mit entweder
   a) dem diese Alkohole enthaltenden Reaktionsgemisch, oder
   b) den isolierten Alkoholen
   unter Erhitzen in Gegenwart von Sauerstoff, mindestens einem tertiären Amin und vorzugsweise mindestens einem Polymerisationsinhibitor zur Oxadimethacrylverbindung I, CH₂=C(E)CH₂-O-CH₂C(F)=CH₂, oder
D) Umsetzung einer Acrylverbindung II in Gegenwart von Sauerstoff, mindestens einem tertiären Amin und mindestens einem Polymerisationsinhibitor mit Formaldehyd oder einer Formaldehyd-liefernden Verbindung zum Alkohol III, und anschließende weitere Umsetzung des isolierten Alkohols III, oder des den nicht isolierten Alkohol III enthaltenden Reaktionsgemisches, mit einem weiteren, davon verschiedenen Alkohol IIIa unter Erhitzen in Gegenwart von Sauerstoff, mindestens einem tertiären Amin und vorzugsweise mindestens einem Polymerisationsinhibitor zur Oxadimethacrylverbindung I, CH₂=C(E)CH₂-O-CH₂C(F)=CH₂, oder
E) Umsetzung einer Mischung aus zwei verschiedenen Alkoholen II und IIa in Gegenwart von Sauerstoff, mindestens einem tertiären Amin und mindestens einem Polymerisationsinhibitor unter Erhitzen zur Oxadimethacrylverbindung I CH₂=C(E)CH₂-O-CH₂C(F)=CH₂.

Die für diese Verfahren benötigten Acrylverbindungen II sind entweder käuflich oder man erhält sie beispielsweise durch Veresterung, Umesterung, Amidierung oder Aminolyse nach an sich bekannten Methoden (s. H.Rauch-Puntigam et al., Chemie, Physik und Technologie der Kunststoffe, Bd.9, Springer Verlag, Berlin, 1967) aus den entsprechenden leicht zugänglichen Acrylvorstufen wie Acrylsäure und deren bekannte Derivate.

Die entsprechenden Alkohole III sind entweder bekannt (s. EP-B 184 731) oder nach einem der oben angegebenen Verfahren aus den Acrylverbindungen II zugänglich.

Den Formaldehyd kann man gasförmig, flüssig, beispielsweise als wäßrige Lösung wie Formalin oder in Form einer alkoholischen Lösung, oder in fester Form, zum Beispiel als para-Formaldehyd, Trioxan, Tetroxocan oder als Halbacetal einsetzen.

Als tertiäre Amine kommen offenkettige aliphatische oder cyclische tertiäre Amine in Betracht wie Trimethylamin, Triethylamin, Tri-n-propylamin, Triisopropylamin, Tri-n-butylamin, Triisobutylamin, Tri-n-pentylamin, Methyldiisopropylamin, N,N-Diethylisopropylamin, N,N-Dimethylethylamin, N,N-Dimethylisopropylamin, Tri-2-ethylhexylamin, N-Methyldiethylamin, N,N-Dimethyl-n-propylamin, N,N-Dimethyl-n-butylamin, N,N-Dimethyl-isobutylamin, N,N-Dimethyl-(2-ethylhexyl)amin, N,N-Diisopropyl-(2-ethylhexyl)amin, N,N-Di-n-butyl-(2-ethylhexyl)amin, N-Methyl-di-(2-ethylhexyl)amin, N-n-butyl-(2-ethylhexyl)amin, N-Isobutyl- di-(2-ethylhexyl)amin, Chinuclidin und 1,4-Diazabicyclo[2.2.2]octan (DABCO®), bevorzugt Chinuclidin und DABCO®, besonders bevorzugt DABCO®.

Als Polymerisationsinhibitoren verwendet man in der Regel die üblichen wie Hydrochinon, Hydrochinonmonomethylether, p-Benzochinon, Phenol, 2,6-Dimethylphenol, 2,6-Ditem.-Butylphenol, Methylenblau, Diphenylamin, Cu-(II)-oleat, Fe-(III)-acetylacetonat, Brenzcatechin, bevorzugt Hydrochinonmonomethylether und Hydrochinonmonoethylether.

Den Sauerstoff kann man in reiner Form oder in Form eines Gemisches mit nicht reaktiven Gasen, bevorzugt Luft, über oder durch das Reaktionsgemisch leiten.

Bei der Umsetzung der Acrylverbindung II, bzw. der Mischung II und IIa, zur Oxadimethacrylverbindung I über die Alkoholverbindung III, setzt man in der ersten Stufe die Acrylverbindung II bzw. die Mischung II und IIa und den Formaldehyd im allgemeinen im Molverhältnis Acrylverbindung II bzw. Mischung II und IIa zu Formaldehyd von 1:1 bis 8:1, vorzugsweise von 1,0:1 bis 2,5:1, ein.

Das tertiäre Amin verwendet man hierbei vorzugsweise im Molverhältnis Formaldehyd zu Amin von 1:1 bis 200:1, bevorzugt

Den Polymerisationsinhibitor setzt man in der Regel in Mengen von 10 bis 1000 mg pro kg Acrylverbindung II bzw. Mischung II und IIa ein.

Die Menge des Sauerstoffs liegt in der Regel im Bereich von 0,01 bis 100, bevorzugt von 0,1 bis 20 l/h pro kg Acrylverbindung II bzw. Mischung II und IIa. Verwendet man Luft als Sauerstofflieferanten, so wählt man die Gasmenge im allgemeinen im Bereich von 0,01 bis 1000, bevorzugt von 1 bis 250 1/h pro kg Acrylverbindung II bzw. Mischung II und IIa.

Im allgemeinen arbeitet man bei Temperaturen von 10 bis 100°C, bevorzugt von 40 bis 80°C, besonders bevorzugt von 60 bis 75°C. Desweiteren führt man die Reaktion in der Regel unter Atmosphärendruck durch. Sie kann jedoch auch bei vermindertem oder erhöhtem Druck vorgenommen werden. Ein Arbeiten unter Druck ist vor allem dann angezeigt, wenn man die Umsetzung bei Temperaturen oberhalb von 80°C vornimmt.

Des weiteren führt man die Reaktion in der Regel ohne Lösungsmittel durch. Jedoch kann man die Umsetzung auch in Gegenwart eines geeigneten Lösungsmittels wie ein C₅-C₈-Alkan, bevorzugt n-Pentan, n-Hexan, n-Heptan, n-Octan, i-Octan, ein Carbonsäureester wie Acetylacetat, sowie ein aromatisches Lösungsmittel wie Benzol, Toluol und Xylole, besonders bevorzugt n-Hexan, i-Octan und Toluol, oder deren Mischungen, durchführen.

Die Reaktionszeit hängt hauptsächlich von der Reaktionstemperatur ab. Sie liegt im allgemeinen im Bereich von 1 bis 6 h.

Den bei dieser Reaktion gebildeten Alkohol III, bzw. die Mischung III und IIIa kann man nach den üblichen Aufarbeitungsmethoden wie Destillation oder Chromatographie isolieren.

In der zweiten Stufe, ausgehend vom Alkohol III, bzw. von der Mischung III und IIIa, wählt man in der Regel Art und Menge des Amins, des Polymerisationsinhibitors sowie des Lösungsmittels wie in der ersten Stufe. Die Menge des Sauerstoffs liegt in der Regel im Bereich von 0,01 bis 1000, bevorzugt von 0,1 bis 50 l/h pro kg Alkoholverbindung III bzw. Mischung III und IIIa. Verwendet man Luft als Sauerstofflieferanten, so wählt man die Gasmenge im allgemeinen im Bereich von 0,1 bis 1000, bevorzugt von 1 bis 500 l/h pro kg Alkoholverbindung III bzw. Mischung III und IIIa.

Die Umsetzung der zweiten Stufe (Alkohol III zu Oxadimethacrylverbindung I) nimmt man im allgemeinen bei einer Temperatur im Bereich von 100 bis 200°C, bevorzugt von 100 bis 150°C, und bei einem Druck, der in der Regel im Bereich von 70 bis 300 kPa liegt, vor, bevorzugt arbeitet man jedoch unter Atmosphärendruck.

Das während der Reaktion anfallende Reaktionswasser kann man in der Regel durch Destillation, bevorzugt durch Rektifikation, aus dem Reaktionsgemisch entfernen.

Zweckmäßig kann man dabei dem Reaktionsgemisch ein Schleppmittel zusetzen. Hierfür eignen sich beispielsweise aliphatische, cycloaliphatische und aromatische Kohlenwasserstoffe wie n-Hexan, n-Heptan, i-Octan, Benzol, Toluol, Xylol, Cyclohexan, sowie Carbonsäureester wie Essigsäureethylester, oder die vor der Reaktion nicht abgetrennte Acrylverbindung II. Den Siedepunkt der Schleppmittel wählt man im allgemeinen im Bereich zwischen 80 und 200°C.

Die Reaktionszeit ist von den üblichen Parametern wie Temperatur, Druck und den Mengen der Ausgangsstoffe abhängig und liegt in der Regel im Bereich von 4 bis 12 h.

Führt man die Reaktionen ausgehend von der Acrylverbindung II, bzw. der Mischung II und IIa, einstufig aus, d.h. ohne Isolierung des Alkohols III bzw. der Mischung III und IIIa, so trennt man zweckmäßigerweise die im Überschuß noch vorhandene Acrylverbindung II, bzw. die Mischung II und IIa, vor der Weiterreaktion zur Oxadimethacrylverbindung I ab, beispielsweise durch Destillation. Dies kann jedoch auch nach der Reaktion zur Oxadimethacrylverbindung I erfolgen.

Besonders bevorzugt wird bei Verwendung eines der Verfahren A), C) und D) die in der Regel im Überschuß vorliegende Acrylverbindung II bzw. IIa abdestilliert, bevor mit der Isolierung und Reinigung durch Kristallisation begonnen wird. Ebenso ist es zweckmäßig, das sich bei den Verfahren A) bis E) gebildete Reaktionswasser vor der Kristallisation beispielsweise durch Destillation abzutrennen.

Zur Reinigung kann man die Oxadimethacrylverbindungen I aus Lösungen fällen, die mindestens eine (bei Raumtemperatur) flüssige Kohlenwasserstoffverbindung enthalten. Dabei kann diese Kohlenwasserstoffverbindung bereits von Anfang an in diesen Lösungen vorhanden sein oder erst später hinzugefügt werden.

In der Regel fällt man direkt aus den Reaktionsgemischen, die im allgemeinen neben der Oxadimethacrylverbindung weitere Stoffe wie Ausgangsstoffe, Katalysatoren, Stabilisatoren usw. enthalten können, aus.

Die die Löslichkeit herabsetzende Kohlenwasserstoffverbindung kann man schon zu Beginn der Herstellung der Lösung einsetzen. Zweckmäßig verfährt man in der Regel so, daß man sie erst dann der Lösung mit der. Oxadimethacrylverbindung hinzufügt, wenn man den Fällungs- oder Kristallisationsvorgang einleiten möchte.

Als Kohlenwasserstoffverbindungen verwendet man in der Regel solche, deren Siedepunkte im Bereich von 20 bis 200°C, bevorzugt von 35 bis 130°C, liegen, wie aliphatische, cycloaliphatische oder aromatische Kohlenwasserstoffe oder deren Mischungen. Beispielhaft seien genannt n-Pentan, n-Hexan, n-Heptan, n-Octan, n-Nonan, n-Decan sowie deren verzweigte Isomere, Cyclopentan, Cyclohexan, Cycloheptan, Cyclooctan sowie mit C₁-C₄-Alkyl-Gruppen substituierte Cycloaliphaten wie Methylcyclopentan und Methylcyclohexan, oder aromatische Kohlenwasserstoffe wie Benzol, Toluol, o-, m- und p-Xylol.

Die Kohlenwasserstoffverbindung setzt man in der Regel im Gewichtsverhältnis Kohlenwasserstoffverbindung zu Oxadimethacrylverbindung I von 1:1 bis 100:1, bevorzugt von 1:1 bis 10:1, besonders bevorzugt von 2:1 bis 4:1 ein.

Vorzugsweise wählt man die Temperatur zu Beginn der Kristallisation so, daß sie zweckmäßig 5 bis 15°C unterhalb des Siedepunkts der Kohlenwasserstoffverbindung liegt, um eine möglichst hohe Konzentration an Oxadimethacrylverbindung I in der Kohlenwasserstoffverbindung zu erhalten. Man kann selbstverständlich auch bei anderen Temperaturen arbeiten, beispielsweise bei Raumtemperatur. Jedoch arbeitet man im allgemeinen innerhalb des Bereiches von 20 bis 200°C, bevorzugt von 40 bis 130°C, wobei es gegebenenfalls erforderlich sein kann, daß Drücke größer als Atmosphärendruck zur Anwendung gelangen. In der Regel wählt man einen Druckbereich von 70 bis 250 kPa, bevorzugt Atmosphärendruck.

Fügt man die Kohlenwasserstoffverbindung erst zur Einleitung der Kristallisation hinzu, oder ist die Kohlenwasserstoffverbindung nicht oder nur teilweise mit dem entsprechenden Lösungsmittel mischbar, so kann es vorteilhaft sein, das Gemisch vor der Kristallisation nach üblichen Methoden wie Schütteln, Rühren oder mittels Flüssig-Flüssig-Extraktion, intensiv zu durchmischen. Diesen Schritt kann man ein- oder mehrstufig, kontinuierlich oder diskontinuierlich durchführen. Die Temperatur bei diesem Schritt wählt man zweckmäßig in dem oben genannten Bereich von 20 bis 200, bevorzugt von 40 bis 130°C.

Zur Umkristallisation verwendet man im allgemeinen Lösungen, die die Oxadimethacrylverbindungen in Mengen im Bereich von 5 bis 50, bevorzugt von 10 bis 30 Gew.-% enthalten. Als Lösungsmittel verwendet man dabei in der Regel die weiter oben genannten Kohlenwasserstoffverbindungen.

Das anschließende Auskristallisieren der Oxadimethacrylverbindung I nimmt man in der Regel bei Temperaturen von (-80) bis 30°C, bevorzugt von (-30) bis 20°C vor. Das auskristallisierte Produkt trennt man dann wie üblich, beispielsweise durch Filtrieren oder Zentrifugieren, ab und trocknet es in an sich bekannter Weise.

Nach dem Kristallisationsvorgang kann man, bei Vorliegen von zwei oder mehreren flüssigen Phasen, die nicht mit der Kohlenwasserstoffverbindung angereicherte Phase abtrennen und sie einem erneuten Aufarbeitungszyklus zuführen, um auch die restlichen Mengen der Oxadimethacrylverbindung I zu erfassen. Diesen Vorgang kann man beliebig oft wiederholen und kontinuierlich oder diskontinuierlich durchführen.

Den Kristallisationsvorgang wiederholt im allgemeinen so oft, bis die gewünschte Reinheit erreicht ist.

Oxadimethacrylverbindungen I mit E und/oder F - COOH stellt man vorzugsweise dadurch her, daß man den Oxadimethacrylsäureester I mit E und F = -COOR¹, oder eine Mischung verschiedener dieser Ester, in basischer Lösung hydrolysiert und dann das entstandene Salz ansäuert. Danach kann man die ausgefallene Säure abtrennen und gegebenenfalls im sauren, wäßrigen Milieu umkristallisieren.

Als basische Lösung wählt man im allgemeinen wäßrige Lösungen von Alkalimetallalkoholaten wie Natriummethanolat, Kaliummethanolat, Natriumethanolat, Kaliumethanolat, bevorzugt Natriummethanolat, Alkalimetall- und Erdalkalimetallhydroxide wie Lithiumhydroxid, Natriumhydroxid, Kaliumhydroxid, Magnesiumhydroxid, Calciumhydroxid und Bariumhydroxid, bevorzugt Natrium- und Kaliumhydroxid, oder Ammoniak.

Dem Reaktionsmedium können Zusatzstoffe wie Lösevermittler und Polymerisationsinhibitoren zugesetzt werden. Als Lösevermittler kann man beispielsweise Alkohole, bevorzugt C₁-C₄-Alkohole wie Methanol, Ethanol, n-Propanol, i-Propanol, n-Butanol, tert.-Butanol, besonders bevorzugt Methanol und Ethanol, verwenden. Als Polymerisationsinhibitoren verwendet man bevorzugt die üblichen wasserlösliche Verbindungen wie Hydrochinon, Hydrochinonmonoethylether und Cu (II)-Salze.

Zur Freisetzung der freien Säure setzt man dem Reaktionsmedium eine Säure, bevorzugt eine Mineralsäure wie Schwefelsäure, Salzsäure, Phosphorsäure und Salpetersäure, besonders bevorzugt Salzsäure, zu.

Das Molverhältnis von Base zu Ester wählt man im allgemeinen im Bereich von 1 bis 5, bevorzugt von 2 bis 4. Die Base setzt man in der Regel als wäßrige Lösung in Konzentrationen von 0,1 bis 40, vorzugsweise von 1 bis 20 Gew.-%, bezogen auf Wasser, ein.

Die Menge an Lösevermittler wählt man im allgemeinen im Bereich von 0 bis 30, vorzugsweise von 0 bis 10 Gew.-%, die Menge der Polymerisationsinhibitoren wählt man in der Regel im Bereich von 0 bis 0,1, vorzugsweise von 0 bis 0,05 Gew.-%, jeweils bezogen auf die Gesamtmenge der Reaktionsmischung.

Die Menge der zur Fällung eingesetzten Säure hängt von deren Stärke und Konzentration ab. In der Regel wählt man sie so, daß man das Salz enthaltende Medium, in der Regel das Reaktionsgemisch, auf einen pH-Wert im Bereich von 0,5 bis 2,0, bevorzugt von 0,5 bis 1,5, einstellt.

Die Wahl der Temperatur ist nach den bisherigen Beobachtungen nicht kritisch. In der Regel arbeitet man in einem Temperaturbereich von 10 bis 100°C unter einem Druck im Bereich von 70 bis 300 kPa. Man kann auch bei Temperaturen oberhalb von 100°C, in der Regel aber nicht höher als 200°C, in einem Druckreaktor hydrolysieren. Bevorzugt arbeitet man jedoch unter Atmosphärendruck in einem Bereich von 15 bis 50°C.

Die ausgefällte Oxadimethacrylsäure kann mit den üblichen Methoden wie Filtration, Dekantieren oder Zentrifugation abgetrennt und, falls erwünscht, gereinigt werden, beispielsweise indem man sie mit kaltem Wasser wäscht und anschließend trocknet. Nach den bisherigen Beobachtungen weist die so erhaltene Oxadimethacrylsäure eine Reinheit von mindestens 99 % auf.

Besonders reine Oxadimethacrylsäure, beispielsweise mit einem Gehalt an Nebenprodukten kleiner als 100 ppm, kann man vorzugsweise durch Umkristallisation erhalten. Hierzu lost an in der Regel die Oxadimethacrylsäure in 50 bis 100, bevorzugt 60 bis 100, besonders bevorzugt in 80 bis 100°C heißem Wasser und läßt sie anschließend bei Temperaturen im Bereich von 5 bis 30, vorzugsweise 10 bis 25°C, auskristallisieren. Man kann der Lösung Polymerisationsinhibitoren wie Hydrochinonmonomethylether in Mengen von 10 bis 20 ppm zusetzen. Des weiteren kann man die Lösung mit adsorbierenden Stoffen wie Aktivkohle, Kieselgur und Zeolithe versetzen, anschließend heiß filtrieren und dann zur Kristallisation abkühlen lassen.

Die Carbonsäuregruppen der Oxadimethacrylsäure kann man nach an sich bekannten Verfahren zu Ester-, Amid- und Keton-Gruppen weiterfunktionalisieren (s. Houben-Weyl, Methoden der organischen Chemie, Bd. VIII/III, Thieme, Berlin, 1952, S. 503 ff und S. 647 ff).

Als Komponente B) verwendet man erfindungsgemäß 1 bis 99 Gew.-% mindestens eines weiteren mit den Oxadimethacrylverbindungen I radikalisch copolymerisierbaren Monomeren.

Beispielhaft seien genannt:
Acryl- und Methacrylsäure,
Acrylsäure-C₁-C₂₀-alkylester, bevorzugt die C₁-C₁₂-Alkylester, insbesondere die C₁-C₄-Alkylester wie Methylacrylat, Ethylacrylat, Propylacrylat, n- Butylacrylat, tert.Butylacrylat sowie 2-Ethylhexylacrylat und Laurylacrylat,
Methacrylsäure-C₁-C₂₀-alkylester, bevorzugt die C₁-C₄-Alkylester wie Methylmethacrylat, Ethylmethacrylat, Propylmethacrylat, n-Butylmethacrylat, tert.-Butylmethacrylat, insbesondere Methylmethacrylat,
Acrylsäure-C₅-C₁₂-cycloalkylester wie Cyclopentylacrylat, Cyclohexylacrylat, Cycloheptylacrylat, Cyclooctylacrylat, Cyclododecylacrylat,
Methacrylsäure-C₅-C₁₂-cycloalkylester wie Cyclopentylmethacrylat, Cyclohexylmethacrylat, Cycloheptylmethacrylat, Cyclooctylmethacrylat, Cyclododecylmethacrylat,
Acryl- und Methacrylnitril,
Acryl- und Methacrylimid sowie deren N-Alkyl- und N,N-Dialkylderivate mit C₁-C₂₀-Alkylgruppen,
Vinyl- und Vinylidenester von aliphatischen C₂-C₈-Carbonsäuren wie Vinylacetat,
vinylaromatische Monomere wie Styrol und alpha-Methylstyrol sowie deren ein- oder mehrfach kernsubstituierte Derivate, beispielsweise 2-, 3-, 4-Methylstyrol, 2-, 3-, 4-Ethylstyrol, 2-, 3-, 4-Isopropylstyrol, 4-tert.-Butylstyrol, 3,4-Dimethylstyrol, 2-, 4-Chlorstyrol, 2-, 4-Bromstyrol, 3,4-Dichlorstyrol, Vinyltoluol, besonders bevorzugt Styrol,
Malein-, Fumar- und Itakonsäure,
Malein-, Fumar- und Itakonsäure-C₁-C₁₀-alkylester,
Malein-, Fumar- und Itakonsäureamid sowie deren N-Alkyl- und N,N-Dialkylderivate mit C₁- bis C₁₀-Alkylgruppen
sowie Mischungen davon.

Als Übertragungsregler kann man einwertige C₁-C₁₂-Alkylmercaptane wie Methylmercaptan, sek.-Butylmercaptan, n-, i- und tert.-Dodecylmercaptan sowie Thioessigsäure und deren C₁-C₄-Alkylester verwenden. Bevorzugt setzt man sie in Mengen von 0,01 bis 5 Gew.-%, besonders bevorzugt von 0,05 bis 2 Gew.-% ein. Zur Verbesserung der Wärmebeständigkeit wählt man vorzugsweise Mengen im Bereich von 0,1 bis 1 Gew.-%.

Die Übertragungsregler dienen zur Begrenzung der Kettenlänge und tragen nach den bisherigen Beobachtungen zur Verbesserung der thermischen Stabilität bei.

Eine bevorzugte Ausführungsform betrifft Monomermischungen aus
A) 5 bis 99, bevorzugt 10 bis 50 Gew.-% einer Oxadimeth-acrylatverbindung I, vorzugsweise 2,2'-[Oxybis(methylen)]bis-2-propensäure-dimethylester, 2,2'-[Oxybis(methylen)]bis-2-propensäure-dicyclohexylester, 2,2'-[Oxybis(methylen)]2-propensäure-cyclohexyl-2'-propensäuremethylester, besonders bevorzugt 2,2'-[Oxybis(methylen)]bis-2-propensäure-dimethylester und 2,2'-[Oxybis(methylen)]bis-2-propensäure-dicyclohexylester.
B) 0,99 bis 94,99 bevorzugt 49,99 bis 89,99 Gew.-% eines Monomerengemisches aus
   B₁) 0 bis 15, bevorzugt 1 bis 7 Gew.-% eines Acrylsäure-C₁-C₂₀-alkylesters, vorzugsweise eines Acrylsäure-C₁-C₄-alkylesters wie Methylacrylat, Ethylacrylat, Propylacrylat, n-Butylacrylat, tert.-Butylacrylat, besonders bevorzugt Methylacrylat.
      Ist der Acrylatanteil höher als 15 Gew.-%, so erreicht man zwar höhere Werte für die Thermostabilität und die Fließfähigkeit, jedoch fallen dadurch im allgemeinen gleichzeitig die Werte für die Wärmeformbeständigkeit in zu großem Umfang.
   B₂) 0 bis 94, bevorzugt von 1 bis 90 Gew.-% eines Methacrylsäure-C₁-C₂₀-alkylesters, vorzugsweise eines Methacrylsäure-C₁-C₄-alkylesters wie Methylmethacrylat, Ethylmethacrylat, Propylmethacrylat, n-Butylmethacrylat, tert.-Butylmethacrylat, besonders bevorzugt Methylmethacrylat.
   B₃) 0 bis 20, bevorzugt 1 bis 15 Gew.-% mindestens eines weiteren Monomeren wie Styrol, α-Methylstyrol, Vinylchlorid, Acryl- und Methacrylnitril, Acryl und Methacrylamide und Acryl- sowie Methacrylester.

Die Polymerisation führt man in Gegenwart von 0,01 bis 5, bevorzugt von 0,1 bis 1 Gew.-% n-Dodecylmercaptan durch.

Die Methacrylsäurealkylester als Monomere B₂ führen in der Regel zu einer Verbesserung der Bewitterungsstabilität.

Die Mengen der Komponenten B₁) und B₂) wählt man in der Regel so, daß die Summe im Bereich von 1 bis 93,99 Gew.-% liegt.

Solche bevorzugten Mischungen kann man zur Herstellung von transparenten, wärmeformbeständigen Formmassen verwenden. Sie weisen in der Regel eine gute Bewitterungsstabilität und bei der thermoplastischen Verarbeitung eine gute Thermostabilität auf.

Die Herstellung der erfindungsgemäßen Copolymerisate führt man im allgemeinen in an sich bekannter Weise beispielsweise in Substanz oder in Lösung durch.

Bei der Herstellung durch Substanzpolymerisation kann man öllösliche Initiatoren (Radikalstarter wie Diacylperoxide, Perester wie Pivalinpersäure- tert.-butylester, Peroxidicarbonate, Hydroperoxide, Dialkylperoxide wie Dilaurylperoxid oder Azoverbindungen wie Azo-bis-isobutyronitril) verwenden.

Die Polymerisationstemperatur liegt in der Regel im Bereich von 20 bis 200°C, bevorzugt von 50 bis 160°C.

Das Molekulargewicht kann man durch geeignete Kettenüberträger wie die handelsüblichen Mercaptane oder durch eine geeignete Temperaturführung regulieren. Im allgemeinen wählt man Molekulargewichte im Bereich von 50.000 bis 180.000, bevorzugt von 80.000 bis 130.000 g/mol (Gewichtsmittelwert des Molekulargewichts).

Die Herstellung der Copolymerisate kann auch durch Lösungspolymerisation erfolgen. Geeignete Lösungsmittel sind beispielsweise Toluol, Xylol, Aceton oder Tetrahydrofuran. Im übrigen kann man die Polymerisation unter den für die Substanzpolymerisation geschilderten Bedingungen durchführen.

Nähere Ausführungen hierzu finden sich beispielsweise in Houben-Weyl, Methoden der organischen Chemie, Bd. 14/1.

Neben den wesentlichen Komponenten A) und B) können die Copolymerisate und die daraus hergestellten Formkörper, Folien und Fasern übliche Zusatzstoffe und Verarbeitungshilfsmittel enthalten. Deren Anteil beträgt in der Regel bis zu 5, vorzugsweise bis zu 2 Gew.-%, bezogen auf das Gesamtgewicht der Komponenten A) und B).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher, Antistatika und Flammschutzmittel.

Oxidationsverzögerer und Wärmestabilisatoren, die den thermoplastischen Massen gemäß der Erfindung zugesetzt werden können, sind z.B. sterisch gehinderte Phenole, Hydrochinone, Phosphite und Abkömmlinge und substituierte Vertreter dieser Gruppe und Mischungen dieser Verbindungen, vorzugsweise in Konzentrationen bis zu 1 Gew.-%, bezogen auf das Gewicht der Mischung.

Beispiele für UV-Stabilisatoren sind substituierte Resorcine, Salicylate, Benzotriazole und Benzophenone, die man im allgemeinen in Mengen bis zu 1 Gew.-% einsetzen kann.

Gleit- und Entformungsmittel, die man in der Regel bis zu 5 Gew.-% der thermoplastischen Masse zusetzen kann, sind beispielsweise Stearinsäure, Stearylalkohol, Stearinsäurealkylester und -amide sowie Ester des Pentaerythrits mit langkettigen Fettsäuren. Geeignete Farbstoffe sind organische Farbstoffe, beispielsweise Anthrachinonrot, organische Pigmente und Lacke wie Phtalocyaninblau, anorganische Pigmente wie Titandioxid und Cadmiumsulfid. Als Weichmacher seien beispielhaft Dioctylphtalat, Dibenzylphtalat und Butylbenzylphtalat genannt.

Als Flammschutzmittel kann man beispielsweise eine phosphorhaltige Verbindung in Mengen von 1 bis 40 Gew.-% einsetzen.

Solche Flammschutzmittel sind beispielsweise organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Zugabe der Zusatzstoffe kann man in jeder Stufe der Herstellung durchführen, zweckmäßig gibt man die Stabilisatoren frühzeitig zu, um schon zu Beginn einen Schutz zu haben. In Übereinstimmung damit, gibt man im allgemeinen die Stabilisatoren schon während des Polymerisationsverfahrens zu, soweit sie dieses Verfahren nicht stören.

Die erfindungsgemäßen Copolymerisate kann man nach üblichen Methoden verarbeiten, z.B. durch Spritzguß, Extrusion oder Sintern zur Herstellung von Formkörpern, Folien oder Fasern.

Die nach dem erfindungsgemäßem Verfahren hergestellten Copolymerisate und Formkörper sowie Folien und Fasern haben den Vorteil gegenüber bekannten aus Oxadimethacryl-Verbindungen hergestellten Copolymerisaten, daß sie löslich und thermoplastisch verarbeitbar sind.

Mit den erfindungsgemäßen Copolymerisaten lassen sich thermoplastisch verarbeitbare Formmassen mit hoher Wärmeformbeständigkeit herstellen.

Eine weitere bevorzugte Ausführungsform betrifft Monomermischungen aus
- A) 1 bis 99 Gew.-%,: bevorzugt von 1 bis 40 Gew.-%, des Monomeren I,
- B) 99 bis 1 Gew.-%,: bevorzugt von 99 bis 60 Gew.-%, Methacrylsäure-C₁-C₂₀-alkylester,
- C) 0 bis 20 Gew.-%,: bevorzugt von 1 bis 10 Gew.-%, Acrylsäure-C₁-C₂₀-Alkylester und
- D) 0 bis 20 Gew.-%,: bevorzugt von 1 bis 10 Gew.-%, sonstige Monomere.

Als Monomer I eignen sich vorzugsweise solche, in denen die Gruppen E und F für -COOR¹ stehen, mit der vorgenannten Bedeutung für R¹, insbesondere steht R¹ besonders bevorzugt für die Methyl- und Cyclohexylgruppe.

Besonders bevorzugt eignen sich Monomere I, die weniger als 1 000 ppm, vorzugsweise weniger als 500, besonders bevorzugt weniger als 100 ppm Verunreinigungen, beispielsweise in Form von Oligomeren, aufweisen.

Als Methacrylsäure-C₁-C₂₀-alkylester eignen sich die vorgenannten, beispielhaft aufgeführten Verbindungen, insbesondere Methylmethacrylat.

Als Acrylsäure-C₁-C₂₀-alkylester eignen sich die vorgenannten beispielhaft aufgeführten Verbindungen, insbesondere Methyl-, Ethyl-, n-, i-Propyl, i-, n-, sek-, tert.-Butyl, Pentyl-, Hexyl-, Heptyl-, 2-Ethylhexyl- und Octylacrylat, besonders bevorzugt Methyl-, Ethyl- und n-Butylacrylat.

In der Regel bewirken Zusätze von Alkylacrylaten eine Verbesserung der Flammpolierbarkeit und des Sägeverhaltens sowie eine Erhöhung der Thermostabilität.

Als sonstige Monomere sind insbesondere solche Verbindungen bevorzugt, die nach der Polymerisation zu keiner oder nur zu einer geringen Erniedrigung der Glasübergangstemperatur führen. Beispielhaft seien genannt die vorstehend aufgeführten vinylaromatischen Monomere, insbesondere Styrol und alpha-Methylstyrol sowie Maleinsäureanhydrid und Maleinsäureamid und dessen N-Alkyl- und N,N-Dialkylderivate.

Zur Erhöhung der Spannungsrißbeständigkeit kann man der Monomermischung 0 bis 5 bevorzugt von 0 bis 1 Gew.-%, multifunktionelle Verbindungen enthaltend Methacryl- oder Acrylgruppen, als Vernetzer zusetzen. Beispielhaft seien genannt

Allylmethacrylat und Allylacrylat, 1, 4-Butandioldimethacrylat, 1,4-Butandiolacrylat, Ethylenglykoldimethacrylat, Ethylenglykoldiacrylat, 1,3-Butandioldimethacrylat, 1,3-Butandioldiacrylat, 1,6-Hexandioldimethacrylat, 1,6-Hexandioldiacrylat, Polyethylenglykoldimethacrylat, Polyethylenglykoldiacrylat, Tetraethylenglykoldimethacrylat,

Tetraethylenglykoldiacrylat, Trimethylolpropantrimethacrylat, Trimethylolpropantriacrylat, 2,2-Dimethyl-1,3-propandioldimethacrylat und Divinylbenzol.

Des weiteren kann an, insbesondere bei der Herstellung von Gußglasplatten, 0 bis 5, bevorzugt 0,1 bis 4, besonders bevorzugt 0,5 bis 3 Gew.-%, eines Entformungshilfsmittel zusetzen. Als Entformungshilfsmittel seien beispielhaft genannt:

Stearinsäure, Cellulose-Derivate, Lecithin, Diglyceride der Stearin-, Palmitin- und Ölsäure, langkettige Fettalkohole wie Cetylalkohole, Stearylalkohol sowie langkettige Phosphorsäureester.

Die Polymerisation führt man im allgemeinen wie vorstehend genannt oder nach den in der Literatur beschriebenen allgemeinen Verfahrensweisen zur Kammerpolymerisation durch (s. Kunststoff-Handbuch, Bd. IX, Polymethacrylate, Carl-Hanser-Verlag, 1975, S. 15-21).

Je nach Anwendung kann man der Monomermischung die üblichen UV-Stabilisatoren wie Benzotriazole, Benzophenone, Cyanacrylate oder Oxamide und besonders sog. HALS-Verbindungen (hindered amine light stabilizer) wie die in der EP-A 243 319 genannten Bernsteinsäureester oder Glutarsäureester des 2,2,6,6-Tetramethylpiperidinol-4 mit einem Gehalt von 0,01 bis 1 Gew.-% zugeben.

Des weiteren kann man übliche Zusatzstoffe wie Flammschutzmittel, Antistatika oder Füllstoffe in einer Menge bis zu 40 Gew.-% zusetzen.

Die auf diese Weise hergestellten Polymerisate eignen sich insbesondere zur Herstellung von Gußglasplatten mit einer erhöhten Wärmeformbeständigkeit, wobei das angestrebte Molekulargewichtsmittel (M_{w}) in der Regel größer als 10⁶ g/mol und der Restmonomergehalt kleiner als 2 % beträgt. So hergestellte Gußglasplatten weisen nach bisherigen Beobachtungen eine geringere Bruchrate als herkömmliche Gußglasplatten auf, weil sie sich leichter entformen lassen.

### Beispiele

### A) Beispiele ohne Übertragungsregler

### Beispiel 1

6 g 2,2'-[Oxybis(methylen)]bis-2-propensäure-dimethylester (Reinheit 99,5%), 14 g Methylmethacrylat, 0,02 g Dilaurylperoxid, 0,04 g Pivalinpersäure- tert.-butylester und 80 g Tetrahydrofuran wurden bei einer Temperatur von 65°C 24 h erhitzt. Nach dem Abkühlen wurde mit 1000 ml Methanol versetzt, das hierbei ausgefällte Copolymerisat abfiltriert und bei 50°C und einem Druck von 10 kPa getrocknet. Hierbei fielen 18,6 g (93%) eines vollständig in Tetrahydrofuran und in Chloroform löslichen Copolymerisats mit einer Viskositätszahl von 80 (gemessen als 0,5 gew.-%ige Lösung in Chloroform) an.

### Beispiel 2

Der Versuch aus Beispiel 1 wurde wiederholt mit dem Unterschied, daß das eingesetzte Oxadimethacrylat eine Reinheit von 99,2% aufwies. Hierbei fielen 18,4 g (92%) eines vollständig in Tetrahydrofuran und in Chloroform löslichen Copolymerisats mit einer Viskositätszahl von 83 (gemessen als 0,5 gew.-%ige Lösung in Chloroform) an. Die Glasübergangstemperatur Tg betrug 127°C.

### Beispiel 3

Der Versuch aus Beispiel 2 wurde wiederholt mit dem Unterschied, daß anstelle des Methylacrylats 14,0 g Styrol eingesetzt wurden. Hierbei fielen 14,4 g (72 %) eines vollständig in Tetrahydrofuran und in Chloroform löslichen Copolymerisats mit einer Viskositätszahl von 53 (gemessen als 0,5 gew.-%ige Lösung in Chloroform) und einer Glasübergangstemperatur Tg von 149°C an.

### Beispiel 4

Der Versuch aus Beispiel 3 wurde wiederholt mit dem Unterschied, daß anstelle des 2,2'-[Oxybis(methylen)]bis-2-propensäure-dimethylesters 6,0 g des Dicyclohexylesters (Reinheit 99,5 %) eingesetzt wurden. Hierbei fielen 15,3 g (77 %) eines vollständig in Tetrahydrofuran und in Chloroform Löslichen Copolymerisats mit einer Viskositätszahl von 57 (gemessen als 0,5 gew.-%ige Lösung in Chloroform) und einer Glasübergangstemperatur T_{g} von 124°C an.

### Vergleichsbeispiel 1

Der Versuch aus Beispiel 1 wurde wiederholt mit dem unterschied, daß das eingesetzte Oxadimethacrylat eine Reinheit von 95,0% aufwies. Hierbei fielen 19,0 g (95%) eines in Tetrahydrofuran und in Chloroform unlöslichen Copolymerisats an.

### B) Beispiele mit Übertragungsregler

### Beispiel 5

6 g 2,2'-[Oxybis(methylen)]bis-2-propensäure-dimethylester (Reinheit 99,2 %), 0,3 g Methylacrylat, 13,7 g Methylmethacrylat, 0,02 g Dilaurylperoxid, 0,04 g Pivalinpersäure-tert.-butylester, 0,04 g n-Dodecylmercaptan und 80 g Tetrahydrofuran wurden bei einer Temperatur von 65°C 24 h erhitzt. Nach dem Abkühlen wurde mit 1000 ml Methanol versetzt, das hierbei ausgefällte Copolymerisat abfiltriert und bei 50°C und einem Druck von 10 kPa getrocknet. Hierbei fielen 16,3 g (81 %) eines vollständig in Tetrahydrofuran und in Chloroform löslichen Copolymerisats mit einer Viskositätszahl von 57 (gemessen als 0,5 gew.-%ige Lösung in Chloroform) an.

### Beispiel 6 bis 11

Mit Ausnahme von Beispiel 7 (20,6 g Monomerengemisch) wurden je 20 g eines Monomerengemischs (s. Tabelle) wie in Beispiel 5 beschrieben polymerisiert und aufgearbeitet.

Die Bestimmung der Glasübergangstemperatur, T_{g}, erfolgte nach der DSC-Methode (ASTM D 3418-82).

Um die thermische Stabilität zu ermitteln, wurden Substanzproben aus den jeweiligen Beispielen mittels Thermogravimetrie (TGA) (TGA-M3 der Fa. Mettler) auf 490°C bei einer Aufheizrate von 20°C/min erhitzt und dabei die Massenveränderung bestimmt. Eine Auftragung der relativen Masse (Masse der Probe bei einer bestimmten Temperatur/Anfangsmasse bei Raumtemperatur) gegen die Temperatur ergab jeweils eine Kurve, die sich in drei Teile einteilen ließ: (a) einen oberen, fast waagrechten Ast, der den Beginn des Versuches bis zu dem Zeitpunkt wiedergibt, an dem Teile der Probe sich zu zersetzen begannen, (b) einen daran anschließenden abfallenden Ast, der den Zeitraum wiedergibt, an dem sich der größte Teil der Probe zersetzte, und (c) einen unteren waagrechten Ast, der anzeigt, daß die Zersetzung der Polymerprobe abgeschlossen ist.

Zur Bestimmung der thermischen Stabilität wurden zwei Geraden definiert, die die Asymptoten der Kurvenabschnitte (a) und (b) repräsentieren. Man erhält die eine Gerade durch Verlängerung des nicht gekrümmten Teils der Kurve (a), die andere Gerade durch Bildung der Tangente im Wendepunkt des Kurvenabschnitts (b). Als Maß für die thermische Stabilität wurde die charakteristische Temperatur, T_{z}, definiert, die sich aus dem Schnittpunkt der beiden Geraden ergibt. Zur Berechnung wurde ein auf dem TGA-Meßgerät installiertes Computerprogramm der Fa. Mettler verwendet.

Die Ergebnisse der einzelnen Qualitätsprüfungen sind der Tabelle 1 zu entnehmen. Sie zeigen, daß die erfindungsgemäßen Copolymerisate in ihren thermischen Eigenschaften sowohl den reinen Polymethylmethacrylaten als auch dem bekannten unlöslichen aus Oxadimethacrylat aufgebauten Copolymerisat überlegen sind.

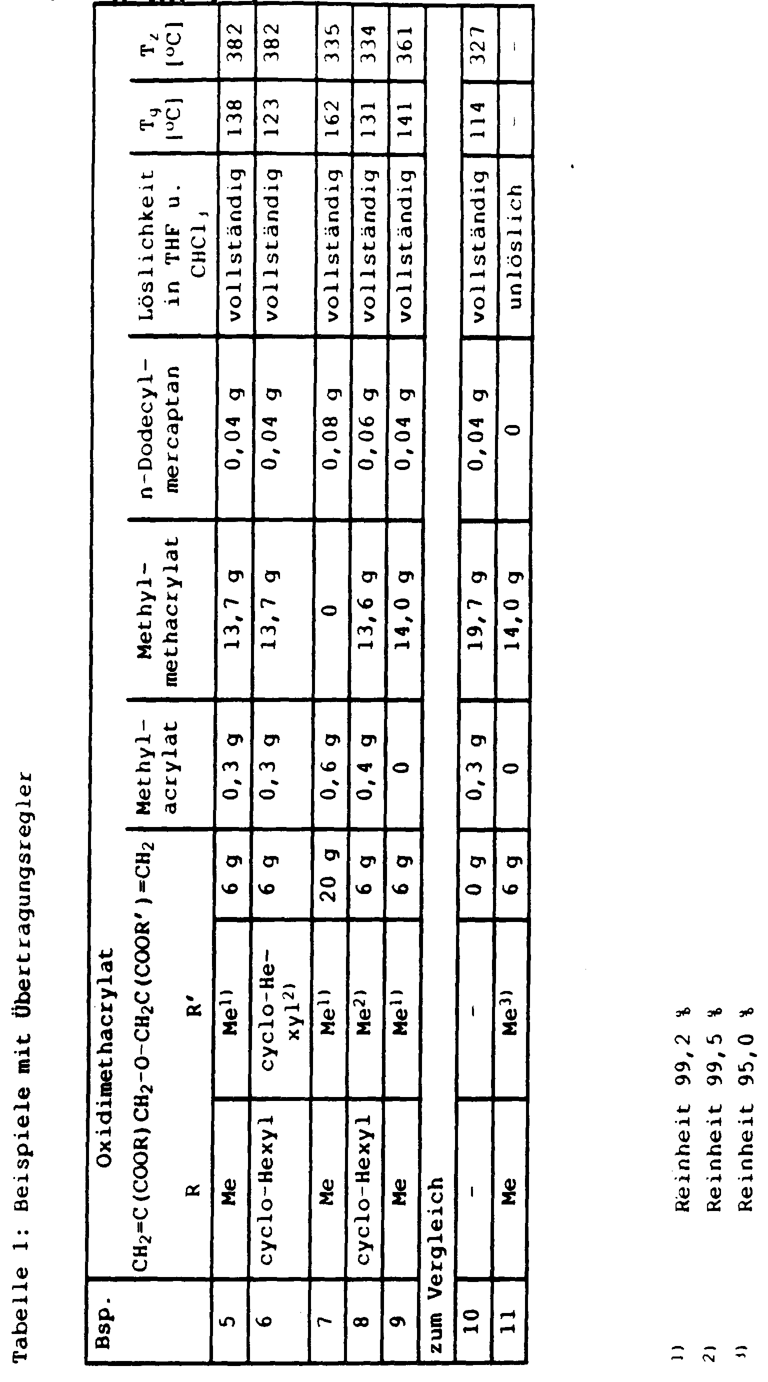

### Beispiele 12 bis 17

Die in der nachfolgenden Tabelle 2 angegebenen Einsatzstoffe wurden in einem 500 ml Kolben zunächst gemischt und durch Anlegung eines Vakuums entgast. Nach Zugabe von 0,002 Gew.-% Azo-bis-isobutyronitril (AIBN) wurde das Gemisch unter N₂ auf 75°C erwärmt und 70 min bei dieser Temperatur belassen. Anschließend wurde dem Gemisch 0,02 Gew.-% tert.-Butylperpivalat und 0,06 Gew.-% tert.-Butylperisononaoat zugesetzt. Die so hergestellte Mischung wurde in eine Kammer aus Silikatglasplatten mit einer Dimension von 250 mm x 250 mm x 4 mm gegeben. Die Kammer wurde dann verschlossen und in einem Wasserbad bei den nachfolgenden Temperaturen polymerisiert:
1 h bei 65°, dann
4 h bei 55°C und
2 h bei 75°C.

Anschließend wurde die Reaktionsmischung in einem Trockenschrank 3 h bei 120°C auspolymerisiert.

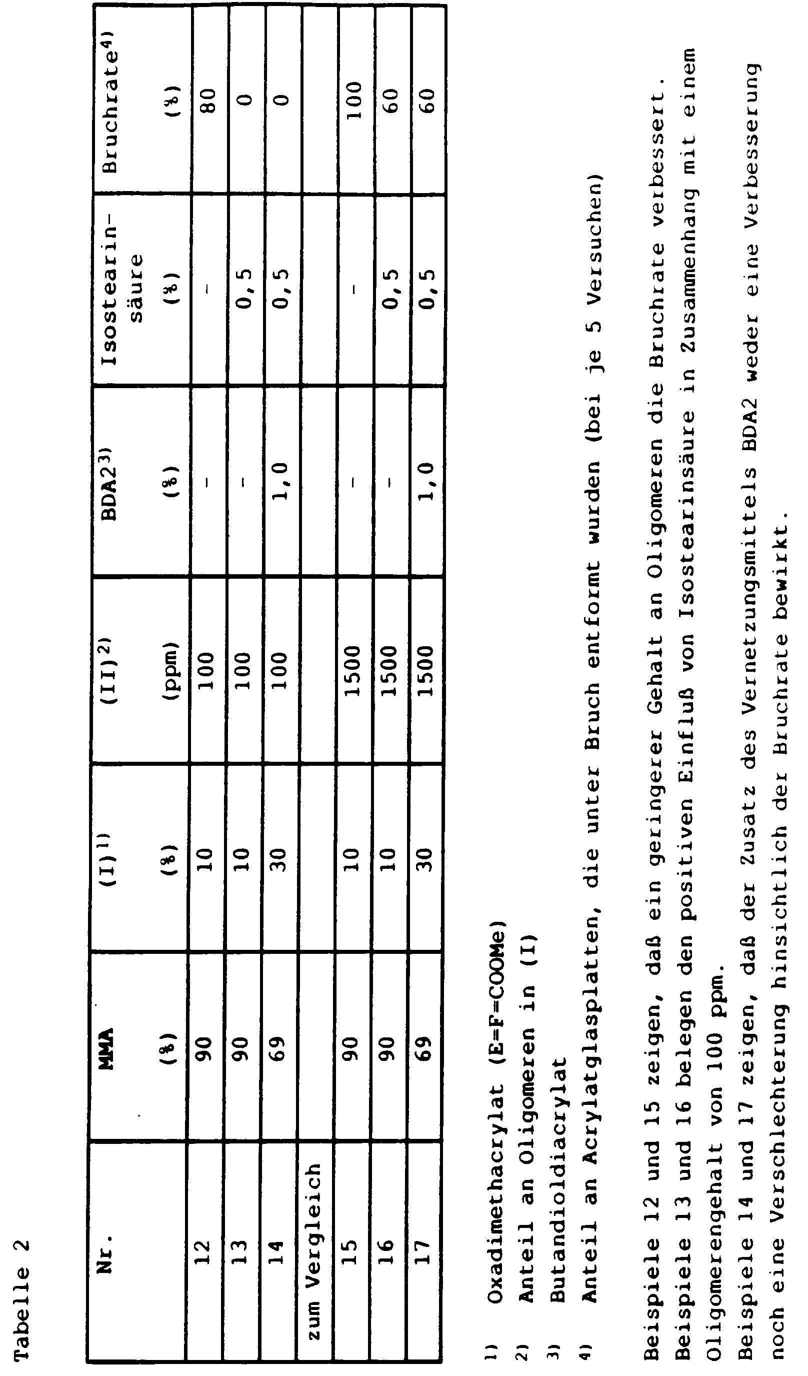

## Patentansprüche

1. In Tetrahydrofuran zu mindestens 95 % lösliche Polymerisate, erhältlich durch Copolymerisation eines Monomerengemisches aus
A) 1 bis 99 Gew.-% mindestens eines zu mindestens 98% reinen Monomeren der allgemeinen Formel I
CH₂=C(E)CH₂-O-CH₂C(F)=CH₂ I
in der E und F ausgewählt sind aus der Gruppe aus -COOR¹, -COR¹, -CONRR³ und -CN, und R¹, R und R³ folgende Bedeutung haben:
R¹ = H, C₁-C₁₈-Alkyl, C₃-C₈-Cycloalkyl, C₃-C₈-Cycloalkyl-C₁-C₅-alkyl, wobei die Cycloalkyl-Ringe bis zu dreifach mit C₁-C₄-Alkyl- oder C₁-C₄-Alkoxy-Gruppen substituiert sein können, Hydroxy-C₁-C₅-alkyl, Amino-C₁-C₅-alkyl, N-C₁-C₄-Alkyl-amino-C₁-C₅-alkyl, N,N-Di-(C₁-C₄-Alkyl)-amino-C₁-C₅-alkyl, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino;
R,R³ = H, C₁-C₁₈-Alkyl, C₃-C₈-Cycloalkyl, C₃-C₈-Cycloalkyl-C₁-C₅-alkyl, wobei die Cycloalkyl-Ringe bis zu dreifach mit C₁-C₄-Alkyl oder C₁-C₄-Alkoxy-Gruppen substituiert sein können, C₆-C₁₈-Aryl, C₆-C₁₈-Aryl-C₁-C₄-alkyl, wobei die Arylgruppen bis zu drei der folgenden Gruppen tragen können: Halogen, C₁-C₂₂-Alkyl, C₁-C₄-Alkoxy, Carboxy, C₁-C₄-Alkoxycarbonyl, Aminocarbonyl, C₁-C₄-Alkylaminocarbonyl, Di-(C₁-C₄-Alkyl)aminocarbonyl, Nitrilo, Nitro, Amino, C₁-C₄-Alkylamino, Di-(C₁-C₄-Alkyl)amino; und
B) 99 bis 1 Gew.-% mindestens eines weiteren radikalisch polymerisierbaren Monomeren.

2. In Tetrahydrofuran zu mindestens 95% lösliche Polymerisate gemäß Anspruch 1, dadurch gekennzeichnet, daß man als weitere radikalisch polymerisierbare Monomere eine Mischung enthaltend
1 bis 99 Gew.-% Methacrylsäure-C₁-C₂₀-alkylester,
0 bis 20 Gew.-% Acrylsäure-C₁-C₂₀-alkylester und
0 bis 20 Gew.-% sonstige Monomere
einsetzt.

3. In Tetrahydrofuran zu mindestens 95 % lösliche Polymerisate gemäß der Ansprüchen 1 oder 2, dadurch gekennzeichnet, daß man dem Monomerengemisch
0 bis 5 Gew.-% eines Vernetzers, enthaltend Methacryl- oder Acrylgruppen, und
0 bis 5 Gew.-% eines Entformungshilfsmittel
zusetzt.

4. In Tetrahydrofuran zu mindestens 95% lösliche Polymerisate gemäß den Ansprüchen 1 bis 3, dadurch gekennzeichnet, daß man die Polymerisation in Gegenwart eines Übertragungsreglers durchführt.

5. Verfahren zur Herstellung von zu mindestens 95% in Tetrahydrofuran löslichen Polymerisaten gemäß Anspruch 1, dadurch gekennzeichnet, daß man ein Monomerengemisch aus
A) 1 bis 99 Gew.-% mindestens eines zu mindestens 98% reinen Monomeren der allgemeinen Formel I und
B) 99 bis 1 Gew.-% mindestens eines weiteren radikalisch polymerisierbaren Monomeren
mit oder ohne Übertragungsregler der Polymerisation zuführt.

6. Verwendung der löslichen Polymerisate nach den Ansprüchen 1 bis 4 zur Herstellung von Formkörpern, Folien oder Fasern.

7. Formkörper, hergestellt aus löslichen Polymerisaten nach den Ansprüchen 1 bis 4.

## Claims

1. At least 95% tetrahydrofuran soluble polymers obtainable by copolymerization of a monomer mixture of
A) from 1 to 99% by weight of at least one at least 98% pure monomer of the general formula I
CH₂=C(E)CH₂-O-CH₂C(F)=CH₂ I
where E and F have been selected from the group consisting of -COOR¹, -COR¹, -CONRR³ and -CN and R¹, R and R³ are each defined as follows:
R¹ = H, C₁-C₁₈-alkyl, C₃-C₈-cycloalkyl, C₃-C₈-cycloalkyl-C₁-C₅-alkyl, wherein the cycloalkyl rings may be C₁-C₄-alkyl- or C₁-C₄-alkoxy- monosubstituted, -disubstituted or -trisubstituted, hydroxy-C₁-C₅-alkyl, amino-C₁-C₅-alkyl, N-C₁-C₄-alkylamino-C₁-C₅-alkyl, N,N-di(C₁-C₄-alkyl)amino-C₁-C₅-alkyl, C₆-C₁₈-aryl, C₆-C₁₈-aryl-C₁-C₄-alkyl, wherein the aryl groups may carry up to three of the following groups: halogen, C₁-C₂₂-alkyl, C₁-C₄-alkoxy, carboxyl, C₁-C₄-alkoxycarbonyl, aminocarbonyl, C₁-C₄-alkylaminocarbonyl, di(C₁-C₄-alkyl)aminocarbonyl, nitrilo, nitro, amino, C₁-C₄-alkylamino, di(C₁-C₄-alkyl)amino;
R, R³ = H, C₁-C₁₈-alkyl, C₃-C₈-cycloalkyl, C₃-C₈-cycloalkyl-C₁-C₅-alkyl, wherein the cycloalkyl rings may be C₁-C₄-alkyl- or C₁-C₄-alkoxy-monosubstituted, -disubstituted or -trisubstituted, C₆-C₁₈-aryl, C₆-C₁₈-aryl-C₁-C₄-alkyl, wherein the aryl groups may carry up to three of the following groups: halogen, C₁-C₂₂-alkyl, C₁-C₄-alkoxy, carboxyl, C₁-C₄-alkoxycarbonyl, aminocarbonyl, C₁-C₄-alkylaminocarbonyl, di(C₁-C₄-alkyl)aminocarbonyl, nitrilo, nitro, amino, C₁-C₄-alkylamino, di(C₁-C₄-alkyl)amino;
and
B) from 99 to 1% by weight of at least one further free-radically polymerizable monomer.

2. At least 95% tetrahydrofuran soluble polymers as claimed in claim 1, wherein the further free-radically polymerizable monomer used is a mixture comprising from 1 to 99% by weight of C₁-C₂₀-alkyl methacrylate, from 0 to 20% by weight of C₁-C₂₀-alkyl acrylate, and from 0 to 20% by weight of other monomers.

3. At least 95% tetrahydrofuran soluble polymers as claimed in claim 1 or 2, wherein the monomer mixture has had added to it
from 0 to 5% by weight of a crosslinker containing methacryloyl or acryloyl groups, and
from 0 to 5% by weight of a demolding aid.

4. At least 95% tetrahydrofuran soluble polymers as claimed in any of claims 1 to 3, for which the polymerization is carried out in the presence of a transfer regulator.

5. A process for preparing at least 95% tetrahydrofuran soluble polymers as claimed in claim 1, which comprises polymerizing a monomer mixture of
A) from 1 to 99% by weight of at least one at least 98% pure monomer of the general formula I, and
B) from 99 to 1% by weight of at least one further free-radically polymerizable monomer with or without a transfer regulator.

6. The use of soluble polymers as claimed in any of claims 1 to 4 for producing moldings, films or fibers.

7. A molding produced from a soluble polymer as claimed in any of claims 1 to 4.

## Revendications

1. Polymères solubles dans le tétrahydrofuranne à raison d'au moins 95%, obtenus par copolymérisation d'un mélange de monomères composé de
A) 1 à 99% en poids d'au moins un monomère de formule générale I, pur à 98% au moins
CH₂=C(E)CH₂-O-CH₂C(F)=CH₂ I
dans laquelle E et F sont choisis dans le groupe constitué par -COOR¹, -COR¹, -CONRR³ et -CN, R¹, R et R³ ayant les significations suivantes:
R¹ = atome d'hydrogène, reste alkyle en C₁-C₁₈, cycloalkyle en C₃-C₈, (cycloalkyl en C₃-C₈)alkyle en C₁-C₅, les noyaux cycloalkyle pouvant être substitués jusqu'à trois fois par des groupements alkyle en C₁-C₄ ou alcoxy en C₁-C₄, hydroxyalkyle en C₁-C₅, aminoalkyle en C₁-C₅, N-(alkyl en C₁-C₄)aminoalkyle en C₁-C₅, N,N-di-(alkyl en C₁-C₄)aminoalkyle en C₁-C₅, aryle en C₆-C₁₈, (aryl en C₆-C₁₈)alkyle en C₁-C₄, les groupements aryle pouvant porter jusqu'à trois des groupements suivants: halogène, alkyl en C₁-C₂₂, alcoxy en C₁-C₄, carboxy, (alcoxy en C₁-C₄)carbonyle, aminocarbonyle, (alkyl en C₁-C₄)aminocarbonyle, di-(alkyl en C₁-C₄)aminocarbonyle, nitrilo, nitro, amino, alkylamino en C₁-C₄, di(alkyl en C₁-C₄)amino;
R, R³ = atomes d'hydrogène, restes alkyle en C₁-C₁₈, cycloalkyle en C₃-C₈, (cycloalkyl en C₃-C₈)alkyle en C₁-C₅, les noyaux cycloalkyle pouvant être substitués jusqu'à trois fois par des groupements alkyle en C₁-C₄ ou alcoxy en C₁-C₄, aryle en C₆-C₁₈, (aryl en C₆-C₁₈)alkyle en C₁-C₄, les groupements aryle pouvant porter jusqu'à trois des groupements suivants: halogène, alkyle en C₁-C₂₂, alcoxy en C₁-C₄, carboxy, (alcoxy en C₁-C₄)carbonyle, aminocarbonyle, (alkyl en C₁-C₄)aminocarbonyle, di(alkyl en C₁-C₄)aminocarbonyle, nitrilo, nitro, amino, alkylamino en C₁-C₄, di(alkyl en C₁-C₄)amino;
et de
B) 99 à 1% en poids d'au moins un autre monomère susceptible de polymérisation radicalaire.

2. Polymères solubles dans le tétrahydrofuranne à raison d'au moins 95% selon la revendication 1, caractérisés en ce que l'on utilise, comme autre monomère susceptible de polymérisation radicalaire, un mélange contenant
1 en 99% en poids d'ester alkylique en C₁-C₂₀ d'acide méthacrylique,
0 à 20% en poids d'ester alkylique en C₁-C₂₀ d'acide acrylique et
0 à 20% en poids d'autres monomères.

3. Polymères solubles dans le tétrahydrofuranne à raison d'au moins 95% selon la revendication 1 ou 2, caractérisés en ce que l'on ajoute, au mélange de monomères,
0 à 5% en poids d'un réticulant contenant des groupements méthacryle ou acryle et
0 à 5% en poids d'un agent auxiliaire de démoulage.

4. Polymères solubles dans le tétrahydrofuranne à raison d'au moins 95% selon l'une quelconque des revendications 1 à 3, caractérisés en ce que l'on effectue la polymérisation en présence d'un régulateur de propagation.

5. Procédé de préparation de polymères solubles dans le tétrahydrofuranne à raison d'au moins 95% selon la revendication 1, caractérisé en ce que l'on soumet à la polymérisation un mélange de monomères composé de
A) 1 à 99% en poids d'au moins un monomère de formule générale I, pur à 98% au moins, et
B) 99 à 1% en poids d'au moins un autre monomère susceptible de polymérisation radicalaire,
avec ou sans régulateur de propagation.

6. Utilisation des polymères solubles selon l'une quelconque des revendications 1 à 4 pour la fabrication de corps moulés, de feuilles ou de fibres.

7. Corps moulés, fabriqués à partir de polymères solubles selon l'une quelconque des revendications 1 à 4.
